(19) **Europäisches Patentamt**

**European Patent Office**

**Office européen des brevets**

(11) **EP 1 337 053 B1**

(12) **EUROPÄISCHE PATENTSCHRIFT**

(45) Veröffentlichungstag und Bekanntmachung des Hinweises auf die Patenterteilung:
**23.06.2004 Patentblatt 2004/26**

(51) Int Cl.⁷: **H04B 7/08**, H04B 7/06

(21) Anmeldenummer: **02003589.5**

(22) Anmeldetag: **15.02.2002**

(54) **Verfahren und Funk-Kommunikationssystem zur Signalisierung von Kanalinformationen**

Method and radio communications system for signalling of channel informations

Procédé et système de radiocommunication pour signaler d'information de canal

(84) Benannte Vertragsstaaten:
**DE ES FR GB IT TR**

(43) Veröffentlichungstag der Anmeldung:
**20.08.2003 Patentblatt 2003/34**

(73) Patentinhaber: **SIEMENS AKTIENGESELLSCHAFT**
**80333 München (DE)**

(72) Erfinder:
- **Baier, Paul-Walter, Prof.**
  **67661 Kaiserslautern (DE)**
- **Jötten, Christoph Arnold**
  **66687 Wadern (DE)**
- **Meurer, Michael**
  **67663 Kaiserslautern (DE)**
- **Weber, Tobias**
  **67731 Otterbach (DE)**

(56) Entgegenhaltungen:
**EP-A- 0 951 091**

- **JOENGREN G ET AL: "UTILIZING QUANTIZED FEEDBACK INFORMATION IN ORTHOGONAL SPACE-TIME BLOCK CODING" GLOBECOM'00. 2000 IEEE GLOBAL TELECOMMUNICATIONS CONFERENCE. SAN FRANCISCO, CA, NOV. 27 - DEC. 1, 2000, IEEE GLOBAL TELECOMMUNICATIONS CONFERENCE, NEW YORK, NY: IEEE, US, Bd. 2 OF 4, 27. November 2000 (2000-11-27), Seiten 995-999, XP001017234 ISBN: 0-7803-6452-X**
- **JONGREN G ET AL: "Combining transmit antenna weights and orthogonal space-time block codes by utilizing side information" SIGNALS, SYSTEMS, AND COMPUTERS, 1999. CONFERENCE RECORD OF THE THIRTY-THIRD ASILOMAR CONFERENCE ON OCT. 24-27, 1999, PISCATAWAY, NJ, USA,IEEE, US, 24. Oktober 1999 (1999-10-24), Seiten 1562-1566, XP010373893 ISBN: 0-7803-5700-0**

EP 1 337 053 B1

**Beschreibung**

Die Erfindung betrifft ein Verfahren zur Signalisierung von Kanalinformationen in einem Funk-Kommunikationssystem mit mindestens einer Sendevorrichtung und mindestens einer Empfangsvorrichtung, wobei sowohl die Sendevorrichtung als auch die Empfangsvorrichtung Antennenkonfigurationen mit mindestens einer Einzelantenne umfassen, nach dem Oberbegriff des Anspruchs 1.

Die Erfindung betrifft ferner ein Funk-Kommunikationssystem mit mindestens einer Sendevorrichtung und mindestens einer Empfangsvorrichtung - insbesondere zur Durchführung des vorgenannten Verfahrens - nach dem Oberbegriff des Anspruchs 8. Des weiteren betrifft die Erfindung zugehörige Sende- und Empfangsvorrichtungen.

In Funk-Kommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station übertragen. Sendende und empfangende Stationen umfassen dabei sowohl Teilnehmerstationen (gegebenenfalls mobil) als auch Basisstationen. Das Abstrahlen der elektromagnetischen Wellen erfolgt dabei mit Trägerfrequenzen, die in dem für das jeweilige System vorgesehenen Frequenzband liegen.

Für zukünftige Funk-Kommunikationssysteme mit CDMA- oder OFDM-Übertragungsverfahren, wie beispielsweise UMTS (Universal Mobile Telecommunication System), Hiperlan, IEEE 802.11a oder DVB (Digital Video Broadcast) sind Frequenzen im Frequenzband von ca. 2-6 GHz vorgesehen. Diese Systeme werden entwickelt mit den Zielen weltweiter Funkabdeckung und/oder einem großen Angebot an Diensten zur Datenübertragung und vor allem einer flexiblen Verwaltung der Kapazität der Funkschnittstelle, die bei Funk-Kommunikationssystemen die Schnittstelle mit den größten Beschränkungen hinsichtlich der Ressourcen ist, d.h. dort die geringsten Ressourcen zur Verfügung gestellt werden können.

Der Zugriff von Stationen auf die gemeinsamen Funkressourcen des Übertragungsmedium, wie zum Beispiel Zeit, Frequenz, Leistung oder Raum, wird bei diesen Funk-Kommunikationssystemen durch Vielfachzugriffsverfahren (Multiple Access, MA) geregelt.

Bei der Funkübertragung zwischen einer Sendestation und einer Empfangsstation eines Funk-Kommunikationssystems kommt es nun infolge der Frequenzselektivität der Übertragungskanäle im Hinblick auf die Übertragungseigenschaften zu Interferenzerscheinungen, die als Intersysmbolinterferenz und Vielfachzugriffsinterferenzen bekannt sind. Diese Interferenzen verzerren die Sendesignale umso stärker, je größer die Übertragungsbandbreite des Übertragungskanal ist. Dies ist daher besonders relevant bei Funk-Kommunikationssystemen mit breitbandigen CDMA- bzw. OFDM-Übertragungsverfahren.

Herkömmlicherweise werden die Sendesignale an der Sendestation ohne Berücksichtigung der wirksamen Funkkanäle generiert. Die dann im Empfänger auftretenden Interferenzerscheinungen werden, zumindest näherungsweise, durch entsprechende angepasste und im allgemeinen sehr aufwendige Verfahren zum Detektieren der übertragenen Daten an den Empfangsstationen beseitigt.

In den letzten Jahren wurden alternative Konzepte, wie zum Beispiel Joint Transmission oder Joint Predistortion untersucht, die durch Berücksichtigung der wirksamen übertragungskanäle bereits beim Generieren der Sendesignale an der Sendestation die Interferenzerscheinungen eliminieren. Dazu ist es nötig, die Kanalinformationen, die insbesondere die Frequenzselektivität der Übertragungskanäle im Hinblick auf die Übertragungseigenschaften wie Interferenzerscheinungen und/oder Mehrwegeausbreitung berücksichtigen, bei der Generierung der Sendesignale zu berücksichtigen. Da diese Kanalinformationen nur im Empfänger ermittelt werden können, müssen sie für Joint Transmission oder Joint Predestortion Verfahren zur Sendevorrichtung zurückübermittelt werden. Diese Signalisierung der Kanalinformationen allokiert Funkressourcen und und sollte daher im wesentlichen minimiert weren.

Insbesondere bei Funkkommunkationssystemen, die sender- und empfängerseitig Antennenkonfigurationen mit mehreren Einzelantennen verwenden (MIMO, Multiple Input Multiple Output), ist es nötig, die Kanalinformationen der Übertragungskanäle sowohl im Sender als auch im Empfänger verfügbar zu machen, damit das Potential der MIMO-Systeme voll ausgeschöpft werden kann.

An der Empfangsvorrichtung kann die Kanalinformation durch blinde, halbblinde oder nichtblinde Kanalschätzverfahren gemäß dem Stand der Technik gewonnen werden. Dagegen ist die Kanalinformation an der Sendevorrichtung nicht ohne weiteres verfügbar und muss zum Beispiel dadurch bereitgestellt werden, dass die vom Empfänger gewonnene Kanalinformation von der Empfangsvorrichtung zur Sendevorrichtung zurücksignalisiert wird. Diese Rücksignalisierung allokiert allerdings Funkressourcen, die zur Überertagung von Nutzinformationen verloren gehen.

Die Erfindung geht davon aus, dass die mindestens eine Sendevorrichtung und die mindestens eine Empfangsvorrichtung über mindestens einen Übertragungskanal miteinander verbunden sind bzw. verbindbar sind und wobei die Kanalinformationen des mindestens einen Übertragungskanals durch eine Kanalmatrix charakterisiert werden bzw. sind.

Der Erfindung liegt daher die Aufgabe zugrunde, ein verbessertes Verfahren zur Rücksignalisierung der Kanalinformationen, ein solches Funk-Kommunikationssystem und zugehörige Sende- und Empfangsvorrichtung bereitzustellen unter Berücksichtigung der Allokierung der Funkressourcen. Insbesondere sollen die Funkressourcen durch das erfindungsgemäße Verfahren möglichst effektiv genutzt werden.

Diese Aufgabe wird hinsichtlich des Verfahrens durch ein Verfahren mit den Merkmalen nach Anspruch 1 gelöst.

Diese Aufgabe wird hinsichtlich des Funk-Kommunikationssystems durch ein Funk-Kommunikationssystem mit den Merkmalen nach Anspruch 8 gelöst. Sende- und Empfangsvorrichtungen zur Lösung dieser Aufgabe sind Gegenstand der Ansprüche 9 und 11.

Ausgestaltungen und Weiterbildungen der Erfindung sind Gegenstand der abhängigen Ansprüche.

Erfindungsgemäß wird in der mindestens einen Empfangsvorrichtung die Kanalmatrix in mindestens zwei Untermatrizen aufgespaltet, wobei jede Untermatrix Kanalinformationen umfasst, welche Veränderungen der übertragungskanäle auf unterschiedlichen Zeitskalen beschreiben.

Durch die Aufspaltung der Kanalmatrix in Untermatrizen ist es möglich, dass die gesamte Kanalinformation in mehrere kleinere Teilpakete - die Untermatrizen - aufgeteilt wird. Jede Untermatrix für sich enthält einen geringeren Informationsinhalt als die gesamte Kanalmatrix. Die Aufteilung entsprechend der Zeitskalen und damit Zeitwerten der Veränderungen der Übertragungskanäle erlaubt es, die Untermatrizen in unterschiedlichen Zeitintervallen zu generieren.

Mit Vorteil signalisiert die Empfangsvorrichtung jede Untermatrix in Zeitintervallen, die durch die jeweilige Zeitskala vorgegeben werden, zur Sendevorrichtung zurück.

Darurch wird der Signalisierungsaufwand, d.h. die Allokierung der Funkressourcen durch die Rücksignalisierung der Kanalinformation, reduziert. Nur die Kanalinformationen, die durch die zeitliche Änderungen des Funkkanals betroffen sind, werden in den dazugehörigen Untermatrizen zurücksignalsiert. Redundante Kanalinformation, d.h. Kanalinformation die sich gegenüber der Vergangenheit nicht geändert hat, wird somit auch nicht zurüchsignalisiert. Die Rücksignalisierung kann über Funkkanäle erfolgen, die im Fall von TDD (Time Division Duplex) aus neuen Zeitschlitzen besteht oder im Fall von FDD (Frequency Division Duplex) aus anderen Frequenzbändern.

In Weiterbildung der Erfindung umfasst mindestens eine Untermatrix die Kanalinformationen über die Veränderungen der Übertragungskanäle auf der Zeitskala des Fast Fadings. Fast Fading beschreibt eine zeitlich schnell variierende Leistungsschwankung des Übertragungskanals, die durch zeitliche Interferenzerscheinungen der unterschiedlichen Ausbreitungswege zustandekommt. Statistisch kann Fast Fading im Fall keiner direkten Sichtverbindung zwischen Sender und Empfänger durch eine Rayleigh-Verteilung oder im Fall einer direkten Sichtverbindung zwischen Sender und Empfänger durch eine Rice-Verteilung beschrieben werden.

In Weiterbildung der Erfindung umfasst mindestens eine Untermatrix die Kanalinformationen über die Veränderungen der Übertragungskanäle auf der Zeitskala des Slow Fadings. Slow Fading beschreibt eine zeitlich lansam variierende Leistungsschwankung des Übertragungskanals, welche durch statische Dämpfungen der Ausbreitungspfade oder durch Streuungen an zum Beispiel Gebäuden der Umgebung zustande kommt. Statistisch kann Slow Fading durch eine Log-Normal-Verteilung beschrieben werden.

Durch die Separierung der Kanalmatrix in Untermatrizen, welche die Anteile von Slow Fading und Fast Fading beschreiben, ist es möglich, die Untermatrizen des Fast Fading relativ schnell auf der Zeitskala des Fast Fading zurüchzusignalisieren, während die Untermatrizen des Slow Fadings relativ langsam auf der Zeitskala des Slow Fadings zurücksignalisiert werden können. Diese Reduktion der Kanalinformationen durch die nicht so häufige Rücksignalisierung der Slow Fading Untermatrizen führt zu einer signifikanten Reduzierung des Signalisierungsaufwandes.

Mit Vorteil umfasst die Sendevorrichtung als Antennenkonfigurationen mehrere Einzelantennen. In diesem Fall ist die Zahl der Ausbreitungspfade maximal so groß wie die Anzahl der Einzelantennen. Mit steigender Anzahl an Ausbreitungspfaden wird das erfindungsgemäße Verfahren immer effektiver, da die Kanalinformation und damit die Kanamatrix mit der Zahl der Ausbreitungspfade zunimmt und folglich der Aufwand bei der Signalisierung von Kanalinformationen durch Übertragung von lediglich Untermatrixen stärker minimiert werden kann.

In Weiterbildung der Erfindung umfasst die Empfangsvorrichtung als Antennenkonfigurationen genau eine Einzelantenne. Das erfindungsgemäße Verfahren ist mit den beschriebenen Vorteilen auch für eine Empfangsvorrichtung mit nur einer Einzelantenne anwendbar. Funk-Kommunikationssysteme mit einer Mehrzahl an Sendeantennen und nur einer.Empfangsantenne werden als MISO (Multiple Input Single Output) Systeme bezeichnet.

In Weiterbildung der Erfindung umfassen die Empfangsvorrichtung als Antennenkonfigurationen mehrere Einzelantennen. Funk-Kommunikationssysteme mit einer Mehrzahl an Sendeantennen und einer Mehrzahl an Empfangsantenne werden als MIMO (Multiple Input Multiple Output) Systeme bezeichnet. Mit der Anzahl der Empfangsantennen nimmt die Anzahl der Empfangssignale auf unterschiedlichen Ausbreitungswegen zu und damit auch die das MIMO System beschreibende Kanalinformation. Das erfindungsgemäße Verfahren ist somit besonders effektiv in MIMO Systemen einsetzbar.

Erfindungsgemäß umfasst das Funk-Kommunikationssystem Mittel in der mindestens einen Empfangsvorrichtung zur Aufspaltung der Kanalmatrix in Untermatrizen, wobei jede Untermatrix Kanalinformationen umfasst, welche Veränderungen der Übertragungskanäle auf unterschiedlichen Zeitskalen beschreiben.

Das Funk-Kommunikationssystem eignet sich insbesondere zur Durchführung des oben beschriebenen Verfahrens.

Für die Erfindung sind in einem Funk-Kommunikationssystem insbesondere die Komponenten Empfangsvorrichtung und Sendevorrichtung von Bedeutung.

Dabei umfasst jede Empfangsvorrichtung mindestens

- Mittel zur Aufspaltung der Kanalmatrix in Untermatrizen, wobei jede Untermatrix Kanalinformationen umfasst, welche Veränderungen der Übertragungskanäle auf unterschiedlichen Zeitskalen beschreiben, und
- Mittel zur Übermittelung aller Untermatrizen entsprechend ihrer Zeitskala zur Sendevorrichtung.

Mit Vorteil sind in den Empfangsvorrichtungen als Antennenkonfigurationen eine oder mehrere Einzelantennen vorhanden.

Jede Sendevorrichtung umfasst mindestens Mittel zum Empfangen und zur Analyse einer von der mindestens einen Empfangsvorrichtung übermittelten Untermatrizen.

Mit Vorteil sind in den Sendevorrichtung in einem Funk-Kommunikationssystem als Antennenkonfigurationen mehrere Einzelantennen vorhanden sind.

Die Empfangsvorrichtungen und Sendevorrichtungen eignen sich insbesondere zur Durchführung des oben beschriebenen Verfahrens.

Einzelheiten und Details der Erfindung werden nachfolgend anhand von Zeichnungen und darin dargestellten Ausführungsbeispielen näher erläutert.

Hierbei zeigen:

Fig. 1: die Antennkonfiguration für ein MIMO Funk-Kommunikationssystem zur Durchführung des erfindungsgemäßen Verfahrens,

Fig. 2: die Antennkonfiguration für ein MISO Funk-Kommunikationssystem zur Durchführung des erfindungsgemäßen Verfahrens mit einem Wichtungsnetzwerk.

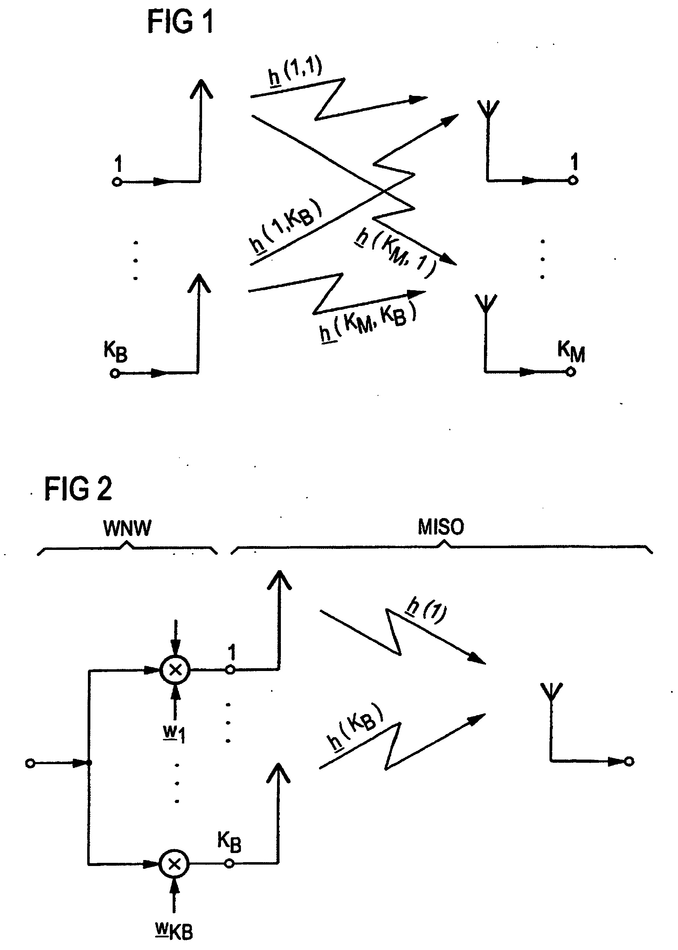

Figur 1 zeigt eine Antennenkonfiguration, die aus $K_B$ Sendeantennen und $K_M$ Empfangsantennen besteht. Ein derartige Antennenkonfiguration wird als MIMO (Multiple Input Multiple Output) System bezeichnet. In Figur 1 sind beispielhaft vier Funk-Kanäle zwischen den Sendeantennen 1 und $K_B$ und den Empfangsantennen 1 und $K_M$ mit den entsprechenden Kanalimpulsantworten $\underline{h}^{(1,1)}$, $\underline{h}^{(1,K_B)}$, $\underline{h}^{(K_M,1)}$ und $\underline{h}^{(K_M,K_B)}$ dargestellt.

Um die Funkübertragung in einem MIMO Funk-Kommunikationssystem zu verbessern, ist es notwendig, dass sowohl bei der Signalgenerierung als auch bei dem Signalempfang die übertragungsbedingungen der $K_B$ x $K_M$ Übertragungskanäle zwischen den $K_B$ Sende- bzw. Eingangsantennen und den KM Empfangs- bzw. Ausgangsantennen berücksichtigt werden. Als Voraussetzung dafür, ist es notwendig, dass die Kanalinformationen sowohl am Sender als auch am Empfänger bekannt sind.

Am Empfänger können die Kanalinformationen mit herkömmlichen Methoden zur Kanalschätzung, die auf der Analyse von sogenannten Pilotsequenzen beruhen, analysiert werden. Im Sender sind die Kanalinformationen a priori nicht bekannt, mit Ausnahme von TDD-Systemen, in denen der Auf- (UL, Uplink) und Abwärts- (DL, Downlink) Übertragungskanal aufgrund des Reziprozitätstheorems die identische Impulsantwort besitzen. In allen anderen Fällen, insbesondere in FDD-Systemen, wird die Kanalinformation im Empfänger analysiert und muss an den Sender zurücksignalisiert werden. Diese Rücksignalisierung allokiert Funkressourcen, so dass das erfindungsgemäße Verfahren dazu beiträgt, dass der Aufwand für diese Rücksignalisierung signifikant reduziert wird und somit eine geringere Allokierung der Funkressourcen erfolgt.

Das hier beispielhaft vorgestellte Verfahren ist insbesondere auf Szenarios eines Funk-Kommunikationssystems anwendbar, die folgende Bedingungen erfüllen:

- Eine Anzahl $K_d \leq K_B$ Ausbreitungspfade, die alle Sendeantennen mit den Empfangsantennen verbindet und in der Umgebung des Ausbreitungsumfeldes gestreut wird,
- die relevanten $K_d$ Ausbreitungspfade nur Slow fading erfahren und
- die Kanalimpulsantwort für jeden der $K_d$ Ausbreitungspfade existiert und Fast fading erfährt.

Ein derartiges Szenario findet man beispielsweise, wenn die $K_B$ Sendeantennen eine Microstruktur bilden, d.h. wenn der Abstand zwischen den $K_B$ Sendeantennen klein ist verglichen zu dem Abstand von den Sendeantennen zu dem nächsten Streuer und wenn die Geschwindigkeiten der Sende- bzw. Empfangsantennen nicht zu hoch ist.

Die Kanalinformation, die das MIMO System aus Figur 1 charakterisiert, ist äqivalent zu der Kanalinformation eines MISO Systems, wie es auf rechten Seite in Figur 2 gezeigt ist. Um den Sender des MISO Systems die Kanalinformation des MIMO Systems aus Figur 1 zur Verfügung zu stellen, kann lediglich die Kanalinformation der $K_M$ MISO Systeme am Empfänger bestimmt und zum Sender zurücksignalisiert werden.

Im MISO System nach der rechten Seite aus Figur 2 sind beispielhaft zwei Funk-Kanäle zwischen den Sendeantennen 1 und $K_B$ und der einen Empfangsantennen mit den entsprechenden Kanalimpulsantworten $\underline{h}^{(1)}$ und $\underline{h}^{(K_B)}$ dargestellt.

Ausgangspunkt für die folgenden Betrachtungen ist ein Referenzpunkt, der in der Nachbarschaft der $K_B$ Sendeantennen gewählt wird. Ausgangssignale an den $K_M$ Empfangsantennen können nur diejenigen Sendesignal erzeugen, die von den Sendeantennen in die relevanten $K_d$ Ausbreitungspfade propagieren. Für jede dieser relevanten Ausbreitungspfade existiert eine Impulsantwort

$$\underline{h}_d^{(k_d)} = \left( \underline{h}_{d,1}^{(k_d)} \; ... \; \underline{h}_{d,W}^{(k_d)} \right)^T \text{ mit } k_d = 1 \; ... \; K_d$$

der Dimension W, welche für einen Kanal zwischen dem Eingang einer virtuellen omnidirektionalen Antenne am Referenzpunkt und dem Ausgang einer Empfangsantenne eines MISO Systems gültig ist. In Übereinstimung mit den oben definierten Bedingungen wird angenommen, dass die Elemente $\underline{h}_{d.w}^{(k_d)}$ von $\underline{h}_d^{(k_d)}$ Fast fading unterliegen. Die $K_d$ direktionalen Kanalimpulsantworten $\underline{h}_d^{(K_d)}$ können in einer Matrix

$$\underline{\boldsymbol{H}}_{\boldsymbol{d}} = \left( \underline{\boldsymbol{h}}_{\boldsymbol{d}}^{(1)} ... \underline{\boldsymbol{h}}_{\boldsymbol{d}}^{(K_d)} \right)$$

der Dimension W x $K_d$ angeordnet werden, die als direktionale Kanalmatrix bezeichnet wird.

Zusätzlich wird eine Matrix $\underline{\boldsymbol{A}}$ der Dimension $K_d$ x $K_d$, die als Steering Matrix bezeichnet wird, eingeführt, welche durch die relevanten $K_d$ Ausbreitungspfade, durch geometrische Struktur der Umgebung und durch das Strahlungsprofil der Sendeantennen bestimmt ist. Für eine gegebene Anordnung der Sendeantennen bleibt die Matrix $\underline{\boldsymbol{A}}$ solange unverändert, wie die relevanten Ausbreitungspfade dieselben bleiben.

Die direktionale Kanalimpulsantwort, die für die $K_B$ Sendeantennen und den Ausbreitungspfad $k_d$ gültig ist, kann somit als Produkt aus $\underline{h}^{(k_d)}$ und dem Element $[\underline{\boldsymbol{A}}]_{kd,kB}$ der Matrix $\underline{\boldsymbol{A}}$ geschrieben werden.

Die Kanalimpulsantwort zwischen den Sendeantennen $k_B$ und der Empfangsantenne des MISO Systems kann somit als Vektor

$$\underline{h}_d^{(k_B)} = \left( \underline{h}_1^{(k_B)} \; ... \; \underline{h}_W^{(k_B)} \right)^T \text{ mit } k_B = 1 \; ... \; K_B$$

der Dimension W ausgedrückt werden und wird als räumliche Kanalimpulsantwort bezeichnet. Die $K_B$ räumlichen Kanalimpulsantworten können zur räumlichen Kanalmatrix

$$\underline{\boldsymbol{H}} = \left( \underline{\boldsymbol{h}}^{(1)} ... \underline{\boldsymbol{h}}^{(K_B)} \right)$$

der Dimension W x $K_B$ zusammengefasst werden.

Mit $\underline{\boldsymbol{A}}$ kann die räumliche Kanalmatrix $\underline{\boldsymbol{H}}$ durch die direktionale Kanalmatrix $\underline{\boldsymbol{H}}_{\boldsymbol{d}}$ ausgedrückt werden:

$$\underline{H} = \underline{H}_d \cdot \underline{A} \; .$$

Mit $K_d \leq K_B$ folgt die Bedingung

$$R_A = rank\{\underline{A}\} \leq K_d$$

für den Rang $R_A$ von $\underline{\boldsymbol{A}},$ woraus sich im weiteren auch

$$R_H = rank\{\underline{H}\} \le R_A$$

für den Rang $R_H$ der räumlichen Kanalmatrix $\underline{H}$ ableiten lässt.

Zusammen mit einer $R_A$ x $K_B$ Matrix

$$\underline{U} = \left( \underline{u}^{(1)^T} \cdots \underline{u}^{(R_A)^T} \right)^T ,$$

die aus $R_A$ orthonormalen Reihen $\underline{u}^{(l)}$, 1=1 ... $R_A$ besteht, und einer W x $R_A$ Matrix $\underline{G}$ kann die räumliche Kanalmatrix $\underline{H}$ ausgedrückt werden als:

$$\underline{H} = \underline{G} \cdot \underline{U}.$$

Die Unterräume, die durch die Reihen von $\underline{A}$ und die Reihen von $\underline{U}$ aufgespannt werden, sind identisch, so dass die räumliche Kanalmatrix $\underline{H}$ in diesem Unterraum liegt. Dies impliziert, dass alle Matrizen $\underline{H}$, die unter dem Einfluß von Fast Fading stehen, als Produkt einer festen Matrix $\underline{U}$ und einer Matrix $\underline{G}$, die nur von der momentanen Konfiguration von $\underline{H}$ abhängt, ausgedrückt werden können.

Die Zeilen von $\underline{H}$ befinden sich in dem Unterraum, der durch die Reihen von $\underline{U}$ aufgespannt ist. Daher ergibt die Bestimmung der Kovarianz-Matrix $\underline{H}^{*T}\underline{H}$ von $\underline{H}$ für eine genügend große Anzahl aufeinanderfolgender Samples von $\underline{H}$ und Mittelung eine mittlere Kovarianz-Matrix $\underline{H}^{*T}\underline{H}$. Die Reihen der mittleren Kovarianz-Matrix $\underline{H}^{*T}\underline{H}$ spannen einen identischen Raum wie $\underline{U}$ auf. Daraus folgt, dass sich die Reihen von $\underline{U}$ aus den komplexen konjugierten transponierten Eigenvektoren ergeben, die zu den nicht-verschwindenden Eigenwerten der Matrix $\underline{H}^{*T}\underline{H}$ gehören. Die Anzahl der nichtverschwindenden Eigenwerte von $\underline{H}^{*T}\underline{H}$ ist gleich dem Rang $R_A = rank\{\underline{A}\}$ von $\underline{A}$.

Aufgrund des Fast fading ist eine Erneuerung der Kanalinformation am Sender mit einer Rate von $1/T_{fast}$ nötig. Da die räumliche Kanalmatrix $\underline{H}$ $K_B \cdot$ W Elemente besitzt, ist für diese Erneuerung mindestens eine Transmissionsrate von

$$R_H = \frac{K_B \cdot W}{T_{fast}}$$

komplexen Zahlen pro Zeiteinheit nötig. Anstatt die gesamte Information der Matrix $\underline{H}$ zum Sender zurüchzusignalisieren, kann erfindungsgemäß nur die Information der *Matrizen* $\underline{U}$ und $\underline{G}$ zurücksignalisiert werden.

Aufgrund des Slow Fading ändern sich die relevanten $K_d$ Ausbreitungspfade nur mit einer Rate von $1/T_{slow}$, was bedeutet, dass die Matrix $\underline{U}$ mit dieser Rate am Sender erneuert werden sollte. Diese Erneuerungsrate bedeutet eine Signalisierungsrate von

$$R_U = \frac{K_B \cdot W}{T_{slow}}$$

komplexen Zahlen pro Zeiteinheit.

Die Aufwandsminimierung bei der Signalisierung nach der Erfindung bringt eine Signalisierung der Informationen der Matrix $\underline{U}$ mit einer Rate von $1/T_{slow}$ und eine Signalisierung der Informationen der Matrix $\underline{G}$ mit einer Rate von $1/T_{fast}$. Da die Matrix $\underline{G}$ $K_d \cdot$ W Elemente aufweist, ist eine Signalisierungsrate für die Informationen der Matrix $\underline{G}$ von

$$R_G = \frac{R_A \cdot W}{T_{fast}}$$

erforderlich.

Mit $R_H$, $R_U$ und $R_G$ ergibt sich die erfindungsgemäße relative Reduzierung r der Signalisierungsrate zu

$$r = \frac{R_U + R_G}{R_H} = \frac{\dfrac{R_A \cdot K_B}{T_{slow}} + \dfrac{R_A \cdot W}{T_{fast}}}{\dfrac{K_B \cdot W}{T_{fast}}} = R_A \cdot \left( \frac{1}{W} \frac{T_{fast}}{T_{slow}} + \frac{1}{K_B} \right) \quad .$$

Es ist anzustreben, dass r möglichst klein wird. Wie aus der aufgeführten Gleichung hervorgeht, nimmt r mit zunehmenden Werten von W, $T_{slow}$ und $K_B$ ab. Andererseits nimmt r mit steigenden Werten von $R_A$ und $T_{fast}$ zu.

Nimmt man beispielsweise die Werte

$$K_d = R_A = 2, \ W = 10, \ T_{fast} = 1ms, \ T_{slow} = 1s \ \text{und} \ K_B = 8$$

an, so ergibt sich durch das erfindungsgemäße Verfahren eine Reduzierung der Signalisierungsrate von r=0,25. Das bedeutet, dass der bei Anwendung der Erfindung erforderliche Signalisierungsaufwand in diesem Fall lediglich 25 % des ansonsten erforderlichen Signalisierungsaufwand beträgt bzw. die Erfindung eine Reduzierung um 75 % ermöglicht.

Dies zeigt deutlich, dass das erfindungsgemäße Verfahren zu einer signifikanten Entlastung der Funkressource führt.

Ausgehend von einem MISO System entsprechend dem rechten Teil in Figur 2 können $K_B$ Sendeantennen von einem gemeinsamen Eingang mittels eines auf der linken Seite von Figur 2 dargestellten Wichtungsnetzwerks WNW gespeist werden, das durch Wichtungsvektoren

$$\underline{w} = \left( w_1 \ldots \underline{w}_{K_B} \right)^T$$

der Dimension $K_B$ charakterisiert ist.

Mit **H** und **w** ergibt sich die Impulsantwort des Übertragungskanals zu

$$\underline{h} = \underline{H} \cdot \underline{w}.$$

Die Reihen von **H** sind Linearkombinationen der orthonormalen Reihen $\underline{u}^{(1)}$, 1=1 ... $R_A$ von **U**. Mit einem Vektor **g** der Dimension $R_A$ und einem *Vektor w* der Dimension $K_B$, welche beide orthogonal zum dem durch die Reihen $\underline{u}^{(1)}$ der Matrix **U** aufgespannten Raum sind, kann jeder für den Sender geeignete *Wichtungsvektor w als* Summe

$$\underline{w} = \underline{U}^{*T} g + \underline{w}_{orth}$$

geschrieben werden. Dabei trägt **w**$_{orth}$ nicht zu **h** bei und stellt gesendete Signalkomponenten dar, die keinen Einfluß auf das Empfangssignal haben. Um die Abstrahlung von Energie zu vermeiden, die nicht am Empfänger ankommt, sollte **w**$_{orth}$ gleich null sein.

Setzt man **w** in **h** ein, so ergibt sich

$$\underline{h} = \underline{GUU}^{*T} g + \underline{GUw}_{orth} = \underline{Gg}.$$

Nun ist *ein h* zu erzeugen durch geeignete Wahl des Vektors **w**. Dieser muss selbstverständlich in dem Raum liegen, der durch die Reihen $\underline{u}^{(l)}$, 1=1 ... $R_A$ der Matrix **U** aufgespannt wird.

Ist $W \leq R_A$, so ergibt ein Vektor **g** die verlangte Kanalimpulsantwort mit:

$$\underline{g} = \underline{G}^{*T} \left( \underline{GG}^{*T} \right)^{-1} \underline{h} \cdot$$

Ist W > $R_A$, so existiert im allgemeinen die verlangte Kanalimpulsantwort $\underline{h}$ nicht. In diesem Fall ergibt sich eine Impulsantwort $\underline{\tilde{h}}$, die - im gausschen Sinn - am besten die geforderten Anforderungen erfüllt. $\underline{\tilde{h}}$ kann angegeben werden als

$$\underline{g} = \left(\underline{G}\underline{G}^{*T}\right)^{-1}\underline{G}^{*T}\underline{h}\cdot$$

$\underline{g}$ wird im Empfänger generiert und zum Sender zurücksignalisiert. Im Sender wird dann w durch Einsetzen von g bestimmt. Da $\underline{g}$ nur aus $R_A$ komplexen Zahlen besteht, gestaltet sich diese Rücksignalisierung im Aufwand sehr niedrig.

Anstatt $\underline{w}$ so auszuwählen, dass man das gewünschte $\underline{h}$ erhält, kann $\underline{w}$ auch derart gewählt werden, dass die Energie $\underline{h}^{*T}\underline{h}$ relativ zur Sendeenergie $\underline{w}^{*T}\underline{w}$ maximiert wird. Die Sendeenergie ergibt sich zu

$$\underline{w}^{*T}\underline{w} = \underline{g}^{*T}\underline{U}\underline{U}^{*T}\underline{g} = \underline{g}^{*T}\underline{g}$$

bzw.

$$\underline{h}^{*T}\underline{h} = \underline{g}^{*T}\underline{G}\underline{G}^{*T}\underline{g}\cdot$$

Daraus ergibt sich

$$\underline{g} = \arg\max_{\underline{g}\in C^{L_M}}\left[\frac{\underline{g}^{*T}\underline{G}^{*T}\underline{G}\underline{g}}{\underline{g}^{*T}\underline{g}}\right].$$

Dieser *Vektor* $\boldsymbol{g}$ ist der Eigenvektor, der zum größten Eigenwert der Matrix $\underline{G}^{*T}\underline{G}$ gehört. Dieser Vektor muss im Empfänger bestimmt werden und zurück zum Sender signalisiert werden. Dort wird er eingesetzt um den gesuchten Vektor $\underline{w}$ zu ermitteln.

Aus diesen Betrachtungen ist ersichtlich, dass die Erfindung eine effektive Möglichkeit eröffnet, den Aufwand bei der Signalisierung von Kanalinformationen zu verringern.

**Patentansprüche**

1. Verfahren zur Signalisierung von Kanalinformationen in einem Funk-Kommunikationssystem mit mindestens einer Sendevorrichtung und mindestens einer Empfangsvorrichtung,
   wobei sowohl die Sendevorrichtung als auch die Empfangsvorrichtung Antennenkonfigurationen mit mindestens einer Einzelantenne umfassen,
   wobei die mindestens eine Sendevorrichtung und die mindestens eine Empfangsvorrichtung über mindestens einen Übertragungskanal miteinander verbunden sind und
   wobei die Kanalinformationen des mindestens einen Übertragungskanals durch eine Kanalmatrix charakterisiert werden, **dadurch gekennzeichnet,**
   **dass** in der mindestens einen Empfangsvorrichtung die Kanalmatrix in mindestens zwei Untermatrizen aufgespaltet wird,
   wobei jede Untermatrix Kanalinformationen umfasst, welche Veränderungen der Übertragungskanäle auf unterschiedlichen Zeitskalen beschreiben.

2. Verfahren nach Anspruch 1, **dadurch gekennzeichnet, dass** die Empfangsvorrichtung jede Untermatrix in Zeitintervallen, die durch die jeweilige Zeitskala vorgegeben werden, zur Sendevorrichtung zurücksignalisiert.

3. Verfahren nach Anspruch 1 oder 2, **dadurch gekennzeichnet, dass** mindestens eine Untermatrix die Kanalinformationen über die Veränderungen der übertragungskanäle auf der Zeitskala des Fast Fadings umfasst.

**4.** Verfahren nach einem der Anspruch 1 bis 3, **dadurch gekennzeichnet, dass** mindestens eine Untermatrix die Kanalinformationen über die Veränderungen der übertragungskanäle auf der Zeitskala des Slow Fadings umfasst.

**5.** Verfahren nach einem der Ansprüche 1 bis 4, **dadurch gekennzeichnet, dass** die Sendevorrichtung als Antennenkonfigurationen mehrere Einzelantennen umfasst.

**6.** Verfahren nach einem der Ansprüche 1 bis 5, **dadurch gekennzeichnet, dass** die Empfangsvorrichtung als Antennenkonfigurationen genau eine Einzelantenne umfasst.

**7.** Verfahren nach einem der Anspruch 1 bis 5, **dadurch gekennzeichnet, dass** die Empfangsvorrichtung als Antennenkonfigurationen mehrere Einzelantennen umfassen.

**8.** Funk-Kommunikationssystem mit mindestens einer Sendevorrichtung und mindestens einer Empfangsvorrichtung, insbesondere zur Durchführung eines Verfahrens nach einem der vorangehenden Ansprüche,
wobei sowohl die Sendevorrichtung als auch die Empfangsvorrichtung Antennenkonfigurationen mit mindestens einer Einzelantenne umfassen,
wobei die mindestens eine Sendevorrichtung und die mindestens eine Empfangsvorrichtung über mindestens einen Übertragungskanal zur Signalisierung von Kanalinformationen miteinander verbindbar sind und
wobei die Kanalinformationen des mindestens einen Ubertragungskanals durch eine Kanalmatrix charakterisiert sind, **dadurch gekennzeichnet,**
**dass** das Funk-Kommunikationssystem Mittel in der mindestens einen Empfangsvorrichtung zur Aufspaltung der Kanalmatrix in Untermatrizen umfasst,
wobei jede Untermatrix Kanalinformationen umfasst, welche Veränderungen der Übertragungskanäle auf unterschiedlichen Zeitskalen beschreiben.

**9.** Empfangsvorrichtung in einem Funk-Kommunikationssystem nach Anspruch 8 umfassend:

- Mittel zur Aufspaltung der Kanalmatrix in Untermatrizen, wobei jede Untermatrix Kanalinformationen umfasst, welche Veränderungen der Übertragungskanäle auf unterschiedlichen Zeitskalen beschreiben, und
- Mittel zur Übermittelung aller Untermatrizen entsprechend ihrer Zeitskala zur Sendevorrichtung.

**10.** Empfangsvorrichtung in einem Funk-Kommunikationssystem nach Anspruch 9, **dadurch gekennzeichnet, dass** als Antennenkonfigurationen eine oder mehrere Einzelantennen vorhanden sind.

**11.** Sendevorrichtung in einem Funk-Kommunikationssystem nach Anspruch 8 umfassend:

- Mittel zum Empfangen und zur Analyse einer von der mindestens einen Empfangsvorrichtung übermittelten Untermatrizen.

**12.** Sendevorrichtung in einem Funk-Kommunikationssystem nach Anspruch 11, **dadurch gekennzeichnet, dass** als Antennenkonfigurationen mehrere Einzelantennen vorhanden sind.

**Claims**

**1.** Method for signalling channel information in a radio communications system having at least one transmitting apparatus and at least one receiving apparatus, with both the transmitting apparatus and the receiving apparatus having antenna configurations with at least one individual antenna,
with the at least one transmitting apparatus and the at least one receiving apparatus being connected to one another via at least one transmission channel, and
with the channel information for the at least one transmission channel being **characterized by** a channel matrix, **characterized**
**in that** the channel matrix in the at least one receiving apparatus is split into at least two matrix elements,
with each matrix element having channel information which describes changes to the transmission channels on different timescales.

**2.** Method according to Claim 1, **characterized in that** the receiving apparatus signals back to the transmitting apparatus each matrix element at time intervals which are predetermined by the respective timescale.

3. Method according to Claim 1 or 2, **characterized in that** at least one matrix element has the channel information about the changes to the transmission channels on the timescale of fast fading.

4. Method according to one of Claims 1 to 3, **characterized in that** at least one matrix element has the channel information about the changes to the transmission channels on the timescale of slow fading.

5. Method according to one of Claims 1 to 4, **characterized in that** the transmitting apparatus has two or more individual antennas as antenna configurations.

6. Method according to one of Claims 1 to 5, **characterized in that** the receiving apparatus has one and only one individual antenna as the antenna configuration.

7. Method according to one of Claims 1 to 5, **characterized in that** the receiving apparatus has two or more individual antennas as antenna configurations.

8. Radio communications system having at least one transmitting apparatus and at least one receiving apparatus, in particular for carrying out a method according to one of the preceding claims,
with both the transmitting apparatus and the receiving apparatus having antenna configurations with at least one individual antenna,
in which the at least one transmitting apparatus and the at least one receiving apparatus can be connected to one another via at least one transmission channel for signalling channel information, and
with the channel information for the at least one transmission channel being **characterized by** a channel matrix, **characterized in that** the radio communications system has means in the at least one receiving apparatus for splitting the channel matrix into matrix elements, and
with each matrix element having channel information which describes changes to the transmission channels on different timescales.

9. Receiving apparatus in a radio communications system according to Claim 8, having:

   - means for splitting the channel matrix into matrix elements, with each matrix element having channel information which describes changes to the transmission channels on different timescales, and
   - means for transmitting all matrix elements to the transmitting apparatus as a function of the timescale.

10. Receiving apparatus in a radio communications system according to Claim 9, **characterized in that** one or more individual antennas are provided as antenna configurations.

11. Transmitting apparatus in a radio communications system according to Claim 8, having:

   - means for receiving and for analysis of one of the matrix elements which are transmitted by the at least one receiving apparatus.

12. Transmitting apparatus in a radio communications system according to Claim 11, **characterized in that** two or more individual antennas are provided as antenna configurations.

**Revendications**

1. Procédé pour la signalisation d'informations des voies, au sein d'un système de radiocommunication, avec au moins un dispositif émetteur et au moins un dispositif récepteur, aussi bien le dispositif émetteur que le dispositif récepteur comprenant des configurations d'antennes avec au moins une antenne individuelle,
   l'au moins un dispositif émetteur et l'au moins un dispositif récepteur étant reliés entre eux par au moins une voie de transmission et
   les informations de l'au moins une voie de transmission étant **caractérisées par** une matrice de voie, **caractérisé en ce que**
   dans l'au moins un dispositif récepteur, la matrice de la voie est scindée en au moins deux sous-matrices, chaque sous-matrice englobant des informations de voie, lesquelles décrivent des modifications des voies de transmission sur différentes échelles de temps.

**2.** Procédé selon la revendication 1,
**caractérisé en ce que**
le dispositif récepteur assure la rétrosignalisation de chaque sous-matrice vers le dispositif émetteur, dans des intervalles de temps qui sont prédéfinis par l'échelle de temps respective.

**3.** Procédé selon l'une quelconque des revendications 1 ou 2,
**caractérisé en ce qu'**au moins une sous-matrice comprend les informations de la voie concernant les modifications des voies de transmissions sur l'échelle du temps de l'évanouissement rapide.

**4.** Procédé selon l'une quelconque des revendications 1 à 3,
**caractérisé en ce que**
au moins une sous-matrice comprend les informations de la voie concernant les modifications des voies de transmissions sur l'échelle du temps de l'évanouissement lent.

**5.** Procédé selon l'une quelconque des revendications 1 à 4,
**caractérisé en ce que**
le dispositif émetteur comprend plusieurs antennes individuelles, en tant que configurations d'antennes.

**6.** Procédé selon l'une quelconque des revendications 1 à 5,
**caractérisé en ce que**
le dispositif récepteur comprend exactement une antenne, en tant que configurations d'antennes.

**7.** Procédé selon l'une quelconque des revendications 1 à 5,
**caractérisé en ce que**
le dispositif émetteur comprend plusieurs antennes individuelles, en tant que configurations d'antennes.

**8.** Système de radiocommunication, avec au moins un dispositif émetteur et au moins un dispositif récepteur, en particulier pour la réalisation d'un procédé selon l'une quelconque des revendications précédentes,
le dispositif émetteur ainsi que le dispositif récepteur comprenant des configurations d'antennes avec au moins une antenne individuelle,
l'au moins un dispositif émetteur et l'au moins un dispositif récepteur pouvant être reliés entre eux par au moins une voie de transmission, pour la signalisation d'informations de voies et
les informations de l'au moins une voie de transmission étant **caractérisées par** une matrice de voie,
**caractérisé en ce que**
le système de radiocommunication comprend des moyens situés dans l'au moins un dispositif récepteur, pour la scission de la matrice de voie en sous-matrices,
chaque sous-matrice comprenant des informations de voie, lesquelles décrivent des modifications des voies de transmission sur différentes échelles de temps.

**9.** Dispositif récepteur au sein d'un système de radiocommunication selon la revendication 8, comprenant

- des moyens de scission de la matrice de la voie en sous-matrices, chaque sous-matrice comprenant des informations de la voie, décrivant des modifications des voies de transmission sur différentes échelles de temps et
- des moyens de transmission de toutes les sous-matrices, vers le dispositif émetteur, en fonction de leur échelle de temps.

**10.** Dispositif récepteur au sein d'un système de radiocommunication selon la revendication 9,
**caractérisé en ce que**
une ou plusieurs antennes individuelles font office de configurations d'antennes.

**11.** Dispositif émetteur au sein d'un système de radiocommunication selon la revendication 8, comprenant

- des moyens pour la réception et pour l'analyse d'une sous-matrice transmise par l'au moins un dispositif récepteur.

**12.** Dispositif émetteur au sein d'un système de radiocommunication selon la revendication 11,
**caractérisé en ce que**

plusieurs antennes individuelles font office de configurations d'antennes.

## FIG 1

## FIG 2